# EUROPÄISCHE PATENTSCHRIFT

(11) **EP 2 153 758 B1**
(45) Veröffentlichungstag und Bekanntmachung des Hinweises auf die Patenterteilung: **20.07.2011**
(21) Anmeldenummer: 08162227.6
(22) Anmeldetag: 12.08.2008
(51) Int. Cl.: A47J 31/42, A47J 42/44

(54) **Verfahren zur Bestimmung der Auslastung einer Mühle**
Method for determining the workload of a mill
Procédé de détermination de l'exploitation d'un moulin

(43) Veröffentlichungstag der Anmeldung: 17.02.2010
(73) Patentinhaber: Schaerer AG, 4528 Zuchwil (CH)
(72) Erfinder: Wüthrich, Christoph, 3053 Wiggiswil (CH)
(74) Vertreter: BOVARD AG

(56) Entgegenhaltungen:
- WO-A-2008/001403
- DE-U1- 9 005 651

## Beschreibung

Die Erfindung betrifft ein Verfahren zur Bestimmung der Auslastung einer Mühle, insbesondere einer Kaffeemühle, nach dem Oberbegriff des Patentanspruchs 1.

Die folgende Beschreibung ist auf eine Kaffeemühle ausgerichtet, auf welche das erfindungsgemässe Verfahren eine bevorzugte Anwendung findet. Die Erfindung kann jedoch ohne wesentliche Änderungen auf jede Mühle angewandt werden, bei der ein Mahlgut in einem Mahlwerk zwischen einem festen (Stator) und einem motorgetriebenen rotierenden Werkzeug (Rotor) zerkleinert wird.

Mahlwerke bestehen meist aus metallischen Werkzeugen, seltener auch aus Korund (Haushaltsgetreidemühlen). Die Mahlwirkung wird durch mehrfache Zerkleinerung in einem sich zunehmend verengenden Mahlspalt erzielt, der meist durch axiale Verschiebung des Rotors oder Stators variiert werden kann. Gemahlen wird durch Scher- und/oder Reibwirkung. Solche Mahlwerke, insbesondere Kaffeemühlen, sind bekannt und finden eine vielfältige Anwendung.

Die Kaffeemühlen in automatischen Kaffeemaschinen werden entweder mit Gleichstrommotoren oder mit Wechselstrommotoren angetrieben. Dabei setzt sich der Wechselstrommotor immer mehr durch, weil er bedeutend preisgünstiger als ein Gleichstrommotor hergestellt werden kann. Während der Wechselstrommotor einfach zu fabrizieren ist und unmittelbar mit dem Wechselstrom des Netzes betrieben werden kann, benötigt ein Gleichstrommotor bei der Herstellung mehr Einzelteile wie Kollektor, Bürsten, zwei verschiedene Wicklungen oder eine Wicklung und Permanentmagnete, sowie ein eigenes Speisesystem aus Transformator und Gleichrichter.

Beim Mahlvorgang ist es wichtig, dessen Ablauf kontrollieren zu können. Dies trifft insbesondere für alle Mühlen zu, bei denen keine direkte visuelle Überwachung des Mahlwerks möglich ist und auch für Fälle, bei denen eine Blockierung des Mahlwerks durch einen Fremdkörper verursacht wird, der von weiterem Mahlgut verdeckt ist. Eine Kontrolle des korrekten Betriebszustandes des Mahlwerks ist bei Kaffeemühlen wichtig, weil es immer wieder vorkommt, dass der Kaffeebohnenvorrat durch Steinchen verunreinigt ist. Diese Steinchen blockieren dann das Mahlwerk.

Bei Mühlen mit Gleichstrommotoren wird die Stromaufnahme gemessen, um zwischen den verschiedenen Betriebszuständen unterscheiden zu können. Es können dadurch mindestens drei Zustände unterschieden werden:
1. Innerhalb von definierten Limiten der Stromaufnahme kann von normalem Mahlen ausgegangen werden.
2. Bei Stromstärken über der oberen Limite ist die Mühle blockiert oder überlastet. In diesem Fall wird der Benutzer meist aufgefordert, eventuelle Fremdkörper aus der Mühle zu entfernen.
3. Wenn keine Bohnen mehr vorhanden sind, ist der Strom kleiner als die untere Limite. Der Benutzer wird aufgefordert, Bohnen nachzufüllen.

Bei der Verwendung von Wechselstrommotoren gestaltet sich die Überwachung anders:

Vielfach wird der Inhalt des Bohnenbehälters per Lichtschranke überwacht. Dies hat den Vorteil, dass eine Leermeldung als Vorwarnung ausgegeben wird und Bohnen rechtzeitig nachgefüllt werden können. Diese Lösung ist allerdings recht aufwändig und anfällig auf Verschmutzung. Zudem hat man damit noch keine Möglichkeit zur Kontrolle von Blockierung und Überlast.

Mit neueren integrierten Schaltungen besteht auch die Möglichkeit, den Strom günstig zu messen. Schwankende Netzspannungen und eine zu geringe Veränderung zwischen Normalbetrieb und Leerlauf machen diese Methode allerdings sehr problematisch.

Ein Nachteil des Wechselstrommotors besteht also darin, dass dessen Stromaufnahme bzw. der damit verbundene Spannungsabfall nicht zur Überwachung des Zustands des Motors ausgenutzt werden kann, dies im Gegensatz zu Gleichstrommotoren, bei denen die Stromaufnahme mit dem abgegebenen Drehmoment (quadratisch) ansteigt.

Die Erfindung hat sich zur Aufgabe gestellt, ein Verfahren zur Ermittlung der Auslastung einer mit einem Wechselstrommotor angetriebenen Mühle, insbesondere einer Kaffeemühle, anzugeben, mit dem der Zustand des Mahlwerks unter den verschiedensten Betriebsbedingungen bestimmt werden kann.

Solche Verfahren sind bereits bekannt geworden. So bestimmt das Verfahren, das im Dokument JP 6-133868 beschrieben ist, das Ende eines Mahlvorgangs durch die Phasenverschiebung, die in diesem Augenblick am Mahlmotor auftritt. Zweck der Bestimmung ist es, für eine Portion immer gleiche Mengen an Kaffee zu mahlen.

Im Dokument JP 4-352915 ist ein Verfahren angegeben, mit welchem die Drehzahl eines Motors einer Kaffeemühle konstant gehalten werden kann. Dies geschieht durch eine entsprechende Phasensteuerung, d.h. eine passende Phasenverschiebung, am Mahlmotor.

Im deutschen Gebrauchsmuster G 90 05 651 ist eine Maschine zum Zubereiten von Kaffee-Aufguss beschrieben, bei der die jeweilige Kaffeemenge für eine Portion dadurch abgemessen wird, dass die Anzahl der Umdrehungen des Mahlwerks bestimmt und der Motor nach Erreichen eines voreingestellten Zählwerts stillgesetzt wird.

WO 2008/001403 beschreibt ein Verfahren zur Detektierung der Bohnenmenge in einer Bohnenmühle, in dem der Motor der Mühle mit zwei unterschiedlichen Antriebsdrehmomenten angetrieben wird und die Menge der Bohnen auf Grund des Drehperiode-Unterschieds bestimmt wird. Diese Mühle besitzt jedoch vorteilhaft einen Gleichstrommotor.

In keinem der angegebenen Dokumente ist ein Verfahren

beschrieben oder auch nur nahegelegt, das es erlaubt, die einzelnen Phasen des Mahlens einer Portion Kaffeemehl zu bestimmen und eventuelle Störungen anzuzeigen bzw. den Mahlmotor dann abzuschalten.

Das erfindungsgemässe Verfahren ist im kennzeichnenden Teil des Patentanspruches 1 definiert. Bevorzugte Ausführungsformen bilden den Gegenstand von abhängigen Ansprüchen.

Die Erfindung beruht auf einer Messung der Drehzahl des Mahlwerks, d.h. dessen Anzahl von Umdrehungen pro Zeiteinheit. Die Drehzahl des Mahlwerks kann auf verschiedene Weise gemessen werden. Man kann beispielsweise an einem rotierenden Bauteil, das drehschlüssig mit dem Mahlwerk gekoppelt ist, ein mechanisches Element anbringen, das bei der Rotation mit einem feststehenden Schaltelement periodisch in Berührung kommt und dabei einen Impuls erzeugt. Es können auch mehrere rotierende und/oder feststehende Elemente eingesetzt werden.

Eine weitere Möglichkeit ist die bekannte optische Drehzahlmessung mit Hilfe von optoelektronischen Elementen, welche berührungsfrei arbeitet.

Gemäss vorliegender Erfindung wird die Verwendung eines Permanentmagneten bevorzugt, der am rotierenden Element angeordnet ist und mit einem feststehenden Hallsensor zusammenwirkt, um die Drehzahl der Mühle zu erfassen. Dieses ebenfalls berührungsfrei arbeitende Verfahren funktioniert gleich wie bei einem Durchflussmesser, pro Umdrehung erhält man einen Impuls. Da die asynchronen Wechselstrommotoren im Leerlauf nahezu netzsynchron laufen, hat man hier eine präzise Referenz. Die Netzfrequenz ist so ziemlich das Stabilste, was es in der Stromversorgung gibt. Der Steuerung muss lediglich mitgeteilt werden, welche der beiden auf der Welt vorkommenden Frequenzen vorliegt, d.h. entweder 50 oder 60 Hz. Durch diese genaue Referenz kann nun ein relativ geringer Abfall der Drehzahl, etwa 5 bis 10%, zur Unterscheidung zwischen Mahlen und Leerlauf herangezogen werden.

Auch die Erfassung von Überlastsituationen wird problemloser, weil die Drehzahl durch eine gegebenenfalls eingebaute Schwungmasse wesentlich stabiler ist als die Stromaufnahme. In Kombination mit einer Messung der aktuellen Netzspannung wäre auch eine Kontrolle oder sogar Automatisierung der Mühleneinstellungen denkbar, wie z.B. die Kompensation einer Abnutzung der Mahlwerkzeuge.

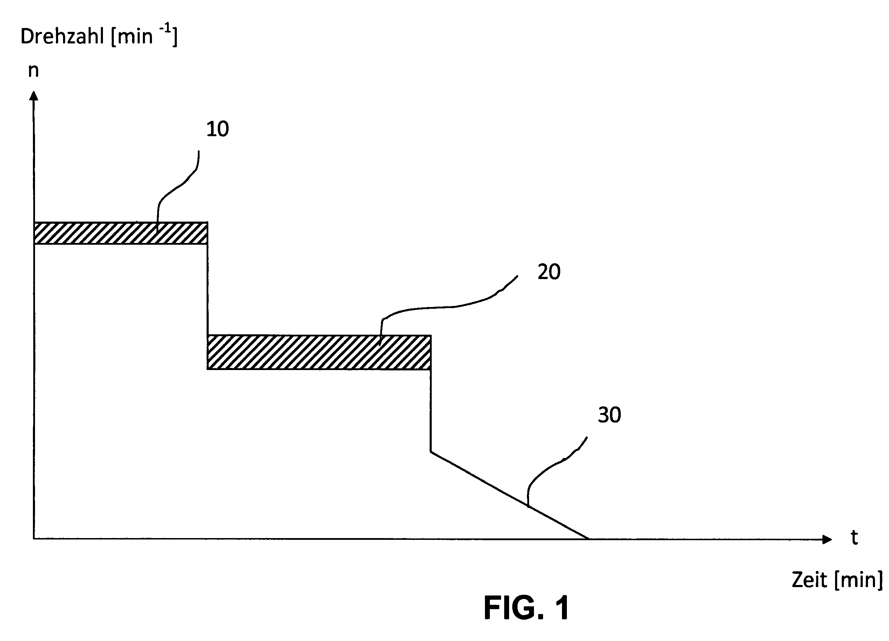

Das erfindungsgemässe Verfahren ermöglicht bei geeigneter Ausbildung der einzelnen Teile der Mühle, insbesondere Kaffeemühle, die Erfassung sämtlicher möglichen Betriebsbedingungen. Dies soll an einem Ausführungsbeispiel erläutert werden, wobei Bezug auf die einzige Figur der beigelegten Zeichnung genommen wird. Im Beispiel wird auf eine Kaffeemaschine verwiesen; solche Maschinen, in denen Kaffee gemahlen und das erzeugte Kaffeemehl zur Bereitung eines Aufgusses weiterverarbeitet wird, sind allgemein bekannt und sollen daher nicht näher beschrieben werden.

Bei der verwendeten Kaffeemaschine ist auf der Welle eines Wechselstrommotors, der das Mahlwerk antreibt, eine scheibenförmige Schwungmasse angeordnet. Am Umfang dieser Masse ist ein kräftiger Permanentmagnet in die Scheibe eingelassen. Der Scheibe steht im Gehäuse der Kaffeemaschine ein Hallsensor derart gegenüber, dass bei jeder Umdrehung der Schwungscheibe im Sensor ein Spannungsimpuls induziert wird. Die Impulse werden in an sich bekannter Weise einer integrierten Schaltung zugeleitet, die einen Taktgeber ("clock") enthält und die Drehzahl der Schwungmasse berechnet.

Anstelle des einen Permanentmagneten können auch mehrere Magnete verwendet werden, beispielsweise zwei Stück, die über einem Durchmesser der Scheibe angeordnet sind, so dass zwei Impulse, die der Hall-Sensor misst und weiterleitet, einer Umdrehung entsprechen.

Als Erstes wird der Kaffeemaschine durch Betätigen eines entsprechenden Umschalters die Netzfrequenz mitgeteilt. Dies ist nur ein einziges Mal nötig; diese Einstellung kann auch schon beim Hersteller vorgenommen werden.

Bevorzugt weist die Kaffeemaschine einen Schieber zwischen dem Kaffeebohnenbehälter und dem Eingang des Mahlwerks auf. Dieser Schieber kann durch einen Elektromagneten geöffnet und geschlossen werden. Es kann sich dabei auch um einen mehrteiligen, irisblendenförmigen Verschluss handeln. Dann wird der Motor des Mahlwerks in Gang gesetzt, die Drehzahl mit Hilfe der Hall-Sonde gemessen und der Messwert gespeichert. Man erhält auf diese Weise die Leerlaufdrehzahl. Dieser vorbereitende Schritt muss auch nicht vor jedem Mahlvorgang ausgeführt werden und kann auf einen Zustand verlegt werden, bei dem der Bohnen-Vorratsbehälter leer ist. Für solche Ausführungsformen des Verfahrens wird auch kein Schieber bzw. Verschluss des Behälters benötigt.

Als nächstes wird die Drehzahl ermittelt und gespeichert, mit welcher der normale Mahlvorgang abläuft. Dieser Wert wird in bestimmten Abständen neu bestimmt und der bereits gespeicherte Drehzahlwert aktualisiert. Da andere Drehzahlwerte auch auf einen Wechsel des Mahlguts, z.B. auf eine andere Kaffeesorte, oder auf einen Verschleiss des Mahlwerks zurückgeführt werden können, kann anstelle der Aktualisierung auch eine laufende Speicherung der Messwerte vorgesehen werden.

Auch ist zu berücksichtigen, dass sich die Drehzahl des Mahlwerks ändert, wenn die Feinheit des Kaffeemehls verändert wird. Daher sieht die Erfindung vor, dass auch die Drehzahlwerte in Abhängigkeit von der Feinheit des gemahlenen Produkts aufgezeichnet werden.

Schliesslich kann der Fall eintreten, dass das Mahlwerk durch einen Fremdkörper oder durch nasse Kaffeebohnen ganz oder teilweise blockiert wird. In diesem Fall fällt die Drehzahl stark ab und kann bis auf Null zurückgehen.

In der Figur sind diese Verhältnisse grob schematisch in Diagrammform dargestellt, wobei die Drehzahl n (z.B. in min-1) gegen die Zeit (z.B. in min) aufgetragen ist.

Der Bereich 10 entspricht dem Leerlauf. Hier ist die Drehzahl hoch und nur wenig veränderlich; Schwankungsfaktoren sind die innere Reibung der Maschine, die mit der Zeit zunimmt, und Unregelmässigkeiten der Netzspannung. Die Breite der Zone 10 ist gering.

Beim normalen Mahlvorgang sinkt die Drehzahl auf einen Wert im Bereich 20 ab. Dieser Bereich ist breiter als die Zone 10, weil die Drehzahl je nach Kaffeesorte und eingestellter Feinheit des Kaffeemehls ziemlich stark schwankt. Zur grösseren Schwankungsbreite trägt auch eine Abnutzung der Mahlwerkzeuge bei; dieser Einfluss ist eher gering, weil eine erhöhte Abnutzung (wodurch die Drehzahl steigt) ein gröberes Kaffeemehl liefert, und der Benutzer wird den Feinheitsgrad der Mahlung entsprechend nachstellen (wodurch die Drehzahl wieder ein wenig sinkt).

Sollte die Mühle sehr schwer gehen oder gar blockieren, so sinkt die Drehzahl längs der Linie 30 und kann auch einen konstanten niedrigen Wert annehmen. Jedenfalls ist vorgesehen, in diesem Zustand einen Alarm auszulösen und/oder den Motor des Mahlwerks anzuhalten.

Die gespeicherten Drehzahlwerte können als solche oder auch zusammen mit ihrer Bedeutung ("Leeriauf", "Mahlen", "Blockierung") auf einem kleinen Anzeigefeld angezeigt werden. Es ist auch möglich, die gespeicherten Werte über einen Anschluss an einen Computer weiterzugeben, der im Falle einer Maschinenstörung schnell die Ursachen auffinden kann. Schliesslich können Drehzahlwerte, die sich einer Bereichslimite im Drehzahlbereich "Mahlen" nähern oder diese überschreiten, zur automatischen Nachstellung des Mahlwerks verwendet werden.

Die Erfindung ist im Obenstehenden als Beispiel einer Kaffeemühle in einem Kaffeeautomaten beschrieben worden. Wie eingangs schon erwähnt wurde, kann die Erfindung aber auf praktisch alle Mahlwerke mit Rotor und Stator angewendet werden, um diese zu überwachen und/oder zu steuern. Auch können die einzelnen Schritte des beschriebenen Verfahrens abgeändert und gegebenenfalls auch vertauscht werden, und es können zusätzliche Schritte eingeführt werden, beispielsweise ein laufender oder intermittierender Vergleich der gemessenen Drehzahlwerte mit der Netzfrequenz und eine allfällige Nachstellung, oder eine Automatisierung aller oder einzelner Verfahrensschritte. Solche Abänderungen und Zusätze, die für den Fachmann geläufig sind, fallen in den Schutzbereich des Patentes.

## Patentansprüche

1. Verfahren zur Bestimmung der Auslastung einer Mühle, insbesondere einer Kaffeemühle, bei der ein Wechselstrommotor einen Rotor eines Mahlwerks mit Stator und Rotor antreibt, **dadurch gekennzeichnet,**
**dass** die Drehzahl des Motors an einem drehschlüssig mit dem Mahlwerk verbundenen Bauteil der Maschine gemessen wird, und dass die Messwerte zur Bestimmung der Mühlenauslastung herangezogen werden, indem in einem ersten Schritt die Leerlaufdrehzahl des Mahlwerks in Abwesenheit von Mahlgut ermittelt und als Bezugswert der nachfolgenden Bestimmungen verwendet wird.

2. Verfahren nach Anspruch 1, **dadurch gekennzeichnet, dass** die Leerlaufdrehzahl in Beziehung zur Netzfrequenz gesetzt wird, nachdem der Nennwert der Netzfrequenz ausgewählt und der Maschine mitgeteilt wurde.

3. Verfahren nach einem der vorstehenden Ansprüche, **dadurch gekennzeichnet, dass** in einem zweiten Schritt die Drehzahl des Mahlwerks bei Normalbetrieb mit dem vorgesehenen Mahlgut bestimmt wird, wobei die Bestimmung jeweils in Abhängigkeit von der Feinheit des gemahlenen Gutes und gegebenenfalls auch vom Abnutzungsgrad des Mahlwerks erfolgt.

4. Verfahren nach einem der vorstehenden Ansprüche, **dadurch gekennzeichnet, dass** bei einer Drehzahl, die unter dem niedrigsten Wert der gemäss Anspruch 3 gemessenen Drehzahlen liegt, oder bei einer Drehzahl, die gegen Null geht oder die Null ist, eine Blockierung des Mahlwerks ermittelt und die Stromversorgung des Motors abgeschaltet wird.

5. Verfahren nach einem der vorstehenden Ansprüche, **dadurch gekennzeichnet, dass** die Drehzahl des Mahlwerks mit einer Vorrichtung ermittelt wird, die aus einer Schwungscheibe und einem Hall-Sensor besteht, wobei die Schwungscheibe drehschlüssig mit dem Mahlwerk verbunden ist und mindestens einen fest angebrachten Permanentmagneten aufweist, der mit dem Hall-Sensor derart zusammenwirkt, dass der Sensor beim Vorbeigang eines Magneten ein impulsförmiges Signal abgibt.

6. Verfahren nach einem der vorstehenden Ansprüche, **dadurch gekennzeichnet, dass** beim Abschalten des Motors infolge einer Blockierung des Mahlwerks ein akustisches Signal abgegeben wird.

7. Verfahren nach einem der vorstehenden Ansprüche, **dadurch gekennzeichnet, dass** sämtliche ermittelten Drehzahlen in einem Speicher abrufbar registriert werden.

8. Verfahren nach einem der vorstehenden Ansprüche, **dadurch gekennzeichnet, dass** der aus der Drehzahl ermittelte Betriebszustand der Mühle optisch angezeigt wird.

9. Verfahren nach einem der vorstehenden Ansprüche, **dadurch gekennzeichnet, dass** die Mühle die Kaffeemühle einer Kaffeemaschine ist.

## Claims

1. Method for determining the load of a mill, in particular a coffee mill, in which an alternating current motor drives a rotor of a mill work with stator and rotor, **characterised**
**in that** the rotational speed of the motor is measured on a component of the machine connected to the mill work in a torque-proof way, and in that the measurement values are consulted for determining the mill load by, in a first step, the idling speed of the mill work being determined in the absence of material to be ground, and being used as reference value for the subsequent determinations.

2. Method according to claim 1, **characterised in that** the idling speed is set in relation to the mains frequency after the nominal value of the mains frequency is selected and is communicated to the machine.

3. Method according to one of the preceding claims, **characterised in that**, in a second step, the rotational speed of the mill work is determined during normal operation with a designated material to be ground, the determination taking place in each case as a function of the fineness of the ground material and also, if applicable, the degree of wear of the mill work.

4. Method according to one of the preceding claims, **characterised in that** with a rotational speed below the lowermost value of the rotational speeds measured according to claim 3 or with a rotational speed near zero or at zero, a blockage of the mill work is detected and the power supply of the motor is switched off.

5. Method according to one of the preceding claims, **characterised in that** the rotational speed of the mill work is determined using a device consisting of a disk flywheel and a Hall sensor, the disk flywheel being connected to the mill work in a torque-proof way and having at least one firmly attached permanent magnet which co-operates with the Hall sensor in such a way that upon passing of a magnet the sensor emits a pulse-type signal.

6. Method according to one of the preceding claims, **characterised in that** upon switching off of the motor as a result of a blockage of the mill work an acoustic signal is emitted.

7. Method according to one of the preceding claims, **characterised in that** all determined rotational speeds are registered in a retrievable way in a memory.

8. Method according to one of the preceding claims, **characterised in that** the operational state of the mill determined from the rotational speed is indicated optically.

9. Method according to one of the preceding claims, **characterised in that** the mill is the coffee mill of a coffee machine.

## Revendications

1. Procédé pour déterminer la charge d'un moulin, notamment d'un moulin à café, dans lequel un moteur à courant alternatif entraine un rotor d'un broyeur avec rotor et stator, **caractérisé**
**en ce que** la vitesse de rotation du moteur est mesurée sur un composant de la machine relié fixe en rotation audit broyeur, et en ce que les valeurs de mesure sont consultées pour déterminer la charge du moulin en déterminant, dans une première étape, la vitesse de ralenti dudit broyeur en l'absence de la matière à broyer, et en utilisant cette vitesse de ralenti comme valeur de référence pour les déterminations subséquentes.

2. Procédé selon la revendication 1, **caractérisé en ce que** la vitesse de ralenti est réglée en relation avec la fréquence du réseau après que la valeur nominale de la fréquence du réseau soit sélectionnée et communiquée à la machine.

3. Procédé selon l'une des revendications précédentes, **caractérisé en ce que**, dans une seconde étape, la vitesse de rotation dudit broyeur est déterminée lors du fonctionnement normal avec une matière à broyer désignée, cette détermination s'effectuant à chaque fois en fonction de la finesse de la matière broyée et aussi, le cas échéant, du degré d'usure dudit broyeur.

4. Procédé selon l'une des revendications précédentes, **caractérisé en ce que**, avec une vitesse de rotation inférieure à la valeur la plus basse desdites vitesses de rotation mesurées selon la revendication 3 ou avec une vitesse de rotation près de zéro ou à zéro, un blocage du broyeur est détecté et l'alimentation du moteur est arrêtée.

5. Procédé selon l'une des revendications précédentes, **caractérisé en ce que** la vitesse de rotation dudit broyeur est déterminée en utilisant un dispositif constitué d'un disque d'inertie et d'un capteur Hall, ledit disque d'inertie étant relié fixe en rotation audit broyeur et comportant au moins un aimant permanent fermement attaché qui coopère avec ledit capteur Hall de telle manière que, lors du passage d'un aimant, ledit capteur émet ur signal sous forme d'impulsion.

6. Procédé selon l'une des revendications précédentes, **caractérisé en ce que**, lorsque ledit moteur est arrêté du fait d'un blocage dudit broyeur, un signal acoustique est émis.

7. Procédé selon l'une des revendications précédentes, **caractérisé en ce que** toutes les vitesses de rotation déterminées sont enregistrées de manière récupérable dans une mémoire.

8. Procédé selon l'une des revendications précédentes, **caractérisé en ce que** l'état de fonctionnement dudit moulin déterminé à partir de la vitesse de rotation est indiqué optiquement.

9. Procédé selon l'une des revendications précédentes, **caractérisé en ce que** ledit moulin est le moulin à café d'une machine à café.
